(19) Europäisches Patentamt / European Patent Office / Office européen des brevets

(11) **EP 3 832 610 A1**

(12) **EUROPEAN PATENT APPLICATION**
published in accordance with Art. 153(4) EPC

(43) Date of publication:
**09.06.2021 Bulletin 2021/23**

(51) Int Cl.:
**G07D 7/121** (2016.01)　　**G01N 21/64** (2006.01)

(21) Application number: **19844049.7**

(86) International application number:
**PCT/JP2019/024712**

(22) Date of filing: **21.06.2019**

(87) International publication number:
**WO 2020/026642 (06.02.2020 Gazette 2020/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **01.08.2018 JP 2018145229**

(71) Applicant: **Vienex Corporation**
**Kanonji-shi, Kagawa 768-0021 (JP)**

(72) Inventor: **MINAMI, Yusuke**
**Kanonji-shi, Kagawa 768-0021 (JP)**

(74) Representative: **Mewburn Ellis LLP**
**Aurora Building**
**Counterslip**
**Bristol BS1 6BX (GB)**

(54) **OPTICAL LINE SENSOR UNIT**

(57)　A light receiver (31) has a plurality of light-receiving elements (311) aligned in a main scanning direction y orthogonal to a sub-scanning direction x, and the plurality of light-receiving elements (311) receives fluorescence or phosphorescence from a paper sheet. A first transport surface (332) configures a surface closer to the light receiver (31) with respect to a transport path (1). A plurality of apertures (331) is provided at positions facing the light-receiving elements (311) on the first transport surface (332). A plurality of window members (34) covers the plurality of apertures (331) and transmits the fluorescence or phosphorescence from the paper sheet toward the light-receiving elements (311). The plurality of apertures (331) is elongated holes each having a width in the sub-scanning direction x longer than a width in the main scanning direction y.

FIG.3

## Description

TECHNICAL FIELD

The present invention relates to an optical line sensor unit that irradiates a paper sheet transported on a transport path along a sub-scanning direction with excitation light and detects fluorescence or phosphorescence from the paper sheet.

BACKGROUND

With a recent remarkable improvement in performance of printing techniques and copying techniques, counterfeiting of paper sheets such as banknotes and securities is becoming more and more sophisticated. It is therefore important to accurately determine authenticity of such paper sheets and eliminate counterfeiting in order to maintain social order. As a method of determining the authenticity of such paper sheets, there is a method using a fluorescent substance or a phosphorescent substance.

A light emitter such as a fluorescent substance or a phosphorescent substance is excited by being irradiated with excitation light having a specific wavelength and has a property of emitting light having a certain wavelength (fluorescence or phosphorescence). There has been known a technique in which a paper sheet including a substance having characteristics of fluorescence or phosphorescence is irradiated with excitation light, and a type and authenticity of the paper sheet are determined on the basis of intensity information of the light emission during the emittance of the excitation light and intensity information of the light emission after the emittance of the excitation light is stopped (afterglow) (see, for example, Patent

Documents 1 to 3).

For example, in Patent Document 1, the signal intensity is measured at two timings during and after the irradiation of the excitation light in order to detect a weak phosphorescent signal. Then, by mutually subtracting the signal intensities measured at the two timings during and after the irradiation, a background signal is removed and the S/N ratio can be improved.

In Patent Document 2, a first detector provided upstream of a transport path detects fluorescence from the paper sheet, and a second detector provided downstream of the transport path detects phosphorescence from the paper sheet. Further, a first reference member that emits a reference light to the first detector, and a second reference member that emits a reference light to the second detector are provided. Detection results of the detector are corrected on the basis of the respective reference lights.

In Patent Document 3, the paper sheet being transported is irradiated with the excitation light, and an attenuation rate of intensity of the phosphorescence is calculated on the basis of the intensity of the phosphorescence from the paper sheet obtained after the emittance of the excitation light is stopped. Then, the authenticity of the paper sheet is determined by using a phosphorescence attenuation rate pattern generated on the basis of the calculated attenuation rate.

PRIOR ART DOCUMENT

PATENT DOCUMENT

Patent Document 1: JP 4048121 B2
Patent Document 2: JP 5367509 B2
Patent Document 3: WO 2015/159438 A

SUMMARY OF THE INVENTION

PROBLEMS TO BE SOLVED BY THE INVENTION

The fluorescence and phosphorescence generated from paper sheets are weak, and thus improving the S/N ratio is important in order to improve the accuracy of authenticity determination of the paper sheets. However, when the paper sheet is dirty, stable fluorescence or phosphorescence cannot be detected, and a sufficient S/N ratio may not be obtained. Further, in a configuration in which a plurality of light-receiving elements is aligned in a main scanning direction, there is a problem that crosstalk is likely to occur between the light-receiving elements.

Further, the conventional optical line sensor unit as described above has a complicated structure and transports the paper sheet at high speed, and there is a problem that the paper sheet is easily jammed in the transport path.

The present invention has been made in view of the above circumstances, and an object of the present invention is to provide an optical line sensor unit capable of improving an S/N ratio upon detection of fluorescence or phosphorescence. Another object of the present invention is to prevent crosstalk between a plurality of light-receiving elements. Still another object of the present invention is to provide an optical line sensor unit in which a paper sheet is less likely to be jammed in a transport path.

MEANS FOR SOLVING THE PROBLEMS

(1) An optical line sensor unit of the present invention is an optical line sensor unit configured to irradiate a paper sheet transported on a transport path along a sub-scanning direction with excitation light and detect fluorescence or phosphorescence from the paper sheet, the optical line sensor unit including a light source, a light receiver, a first transport surface, a plurality of first apertures, and a plurality of first window members. The light source emits the excitation light. The light receiver has a plurality of light-receiving elements aligned in a main scanning direction orthogonal to the sub-scanning direction, and the plurality of light-receiving elements receives the fluorescence or phosphorescence from the paper sheet. The first transport surface configures a surface closer to the light receiver with respect to the transport path. The plurality of first apertures is provided at positions facing the light-receiving elements on the first transport surface. The plurality of first window members covers the plurality of first apertures, and the fluorescence or phosphorescence from the paper sheet is transmitted toward the light-receiving elements. The plurality of first apertures is elongated holes each having a width in the sub-scanning direction longer than a width in the main scanning direction.

In this configuration, the light-receiving elements can receive the fluorescence or phosphorescence from the paper sheet through the first apertures provided at the positions facing the light-receiving elements. The first apertures each formed as an elongated hole, and the width in the sub-scanning direction is longer than the width in the main scanning direction. Thus, ambient light is prevented from being incident on the light-receiving elements, and more light can be received from the paper sheet transported in the sub-scanning direction. This can improve an S/N ratio upon detection of the fluorescence or phosphorescence.

(2) An optical axis of the light source and an optical axis of each of the light-receiving elements may be substantially aligned with each other.

(3) The light receiver may have a plurality of lenses that focuses the fluorescence or phosphorescence from the paper sheet on the light-receiving elements. In this case, the optical line sensor unit may further include a light receiver holder holding the plurality of light-receiving elements and the plurality of lenses.

(4) The plurality of first apertures may each have an oval shape.

(5) Each of the plurality of first apertures may have both ends being arc-shaped with curvature centers separated from each other and straight lines connecting the both ends.

(6) The optical line sensor unit may further include a plurality of shields. The plurality of shields is provided between the light-receiving elements aligned in the main scanning direction, and prevents the fluorescence or phosphorescence diffused at the first window members from being incident on the light-receiving elements other than the light-receiving elements facing the first window members.

In this configuration, the shields provided between the light-receiving elements aligned in the main scanning direction allow only the light from the opposing first window members to be incident on the light-receiving elements. This can prevent crosstalk between the plurality of light-receiving elements.

(7) The paper sheet may be transported on the transport path in both directions along the sub-scanning direction. In this case, it is preferable to satisfy

$$W_v = t_{de} \times V$$

$$W_m < W_s \leq 2W_v + W_m$$

where a width of each of the first apertures in the main scanning direction is $W_m$, a width of each of the first apertures in the sub-scanning direction is $W_s$, decay time of the fluorescence or phosphorescence is $t_{de}$ (second), a transport speed of the paper sheet is $V$ (m/sec), and a distance that any point of the paper sheet moves in the sub-scanning direction during the decay time is $W_v$ (m).

In this configuration where the paper sheet is transported in both directions along the sub-scanning direction, the shape of the elongated holes forming the first apertures can be appropriately set, and thus the S/N ratio upon detection of fluorescence or phosphorescence can be effectively improved.

(8) The paper sheet may be transported on the transport path in one direction along the sub-scanning direction. In this case, it is preferable to satisfy

$$W_v = t_{de} \times V$$

$$W_i = t_r \times V$$

$$W_m < W_s \leq W_v + W_i$$

where a width of each of the first apertures in the main scanning direction is $W_m$, a width of each of the first apertures in the sub-scanning direction is $W_s$, decay time of the fluorescence or phosphorescence is tde (second), irradiation time of the excitation light from the light source is $t_r$ (second), a transport speed of the paper sheet is $V$ (m/sec), a distance that any point of the paper sheet moves in the sub-scanning direction during the decay time is $W_v$ (m), and a distance that any point of the paper sheet moves in the sub-scanning direction during the irradiation time is $W_i$ (m).

In this configuration where the paper sheet is transported in one direction along the sub-scanning direction, the shape of the elongated holes forming the first apertures can be appropriately set, and thus the S/N ratio upon detection of fluorescence or phosphorescence can be effectively improved.

(9) Illuminated regions of the paper sheet by the excitation light from the light source may be substantially circular. In this case, an outer diameter of the illuminated regions is preferably larger than the width of the first apertures in the sub-scanning direction.

(10) An arithmetic average roughness Ra of the surface of the plurality of first window members close to the transport path preferably satisfies

$$0.1a \leq Ra \leq 12.5a.$$

In this configuration, a diffusion of the fluorescence or phosphorescence in the first window members can be suppressed. This can improve the S/N ratio upon detection of fluorescence or phosphorescence, and prevent crosstalk between the plurality of light-receiving elements.

(11) The plurality of first window members may each have such a lens shape that a thickness gradually increases from both edges toward a center of each of the window members in the sub-scanning direction.

This configuration can improve an optical focusing efficiency of the first window members, improve the S/N ratio upon detection of fluorescence or phosphorescence, and prevent crosstalk between the plurality of light-receiving elements. Further, the center of each of the first window members protruding from each of the first apertures can prevent the paper sheet being transported from being caught by each of the first apertures, and thus the paper sheet is less likely to be jammed in the transport path.

(12) A surface of each of the first window members close to the transport path may have an inclined surface or a convex curved surface that protrudes toward the transport path from both edges to the center in the sub-scanning direction. In this case, both edges of the first window members in the sub-scanning direction are located in the first apertures so as not to be exposed to the transport path.

In this configuration, both edges of the first window members in the sub-scanning direction are not exposed to the transport path and are located in the first apertures, and the paper sheet being transported is prevented from being caught by the edges. Further, a tip of the paper sheet being transported can be smoothly guided in a transporting direction along the inclined surface or the convex curved surface of each of the first window members. Therefore, the paper sheet is less likely to be jammed in the transport path.

(13) The light source may have a plurality of light-emitting elements facing the plurality of light-receiving elements across the transport path. In this case, the optical line sensor unit may include a second transport surface, a plurality of second apertures, and a plurality of second window members. The second transport surface configures a surface close to the light source with respect to the transport path. The plurality of second apertures is provided at positions facing the light-emitting elements on the second transport surface. The plurality of second window members covers the plurality of second apertures and transmits light from the light-emitting elements.

(14) The plurality of second apertures may be elongated holes each having a width in the sub-scanning direction longer than a width in the main scanning direction.

In this configuration, the paper sheet can be irradiated with light through the second apertures provided at positions facing the light-emitting elements. The second apertures are each formed as an elongated hole and the width in the sub-scanning direction is longer than the width in the main scanning direction. Thus, the paper sheet transported in the sub-scanning direction can be irradiated with more light. This can improve an S/N ratio upon detection of the fluorescence or phosphorescence.

(15) The plurality of light-emitting elements may be infrared light emitting diodes (LEDs).

(16) The plurality of light-emitting elements may be bullet-shaped LEDs.

(17) A surface of each of the first window members close to the transport path may have an inclined surface or a convex curved surface that protrudes toward the transport path from both edges to the center in the sub-scanning direction. In this case, both edges of the first window members in the sub-scanning direction are located in the first apertures so as not to be exposed to the transport path.

In this configuration, both edges of the first window members in the sub-scanning direction are not exposed to the transport path and are located in the first apertures, and the paper sheet being transported is prevented from being caught by the edges. Further, a tip of the paper sheet being transported can be smoothly guided in a transporting direction along the inclined surface or the convex curved surface of each of the first window members. Therefore, the paper sheet is less likely to be jammed in the transport path. Further, the first apertures each have an elongated hole, and a taper angle of the inclined surface or the convex curved surface of each of the first window members is small. Thus, the paper sheet is less likely to be jammed in the transport path.

EFFECTS OF THE INVENTION

The present invention makes it possible to prevent ambient light from being incident on the light-receiving elements, receive more light from the paper sheet transported in the sub-scanning direction, and thus improve the S/N ratio upon detection of fluorescence or phosphorescence.

BRIEF DESCRIPTION OF THE DRAWINGS

Fig. 1 is a schematic sectional view showing a configuration example of an optical line sensor unit according to one embodiment of the present invention, and shows a cross section along a sub-scanning direction.
Fig. 2 is a sectional view of the optical line sensor unit in Fig. 1 along a main scanning direction.
Fig. 3 is a sectional view showing a detailed configuration of the optical line sensor unit in Fig. 1.
Fig. 4 is a schematic sectional view showing a modification of a window member in Fig. 3.
Fig. 5 is a diagram for describing a shape of an aperture.
Fig. 6 is a diagram for describing a modification of the shape of the aperture.
Fig. 7 is a sectional view of an optical line sensor unit according to another embodiment of the present invention along the main scanning direction.

DETAILED DESCRIPTION OF THE PREFERRED EMBODIMENTS

<Optical line sensor unit>

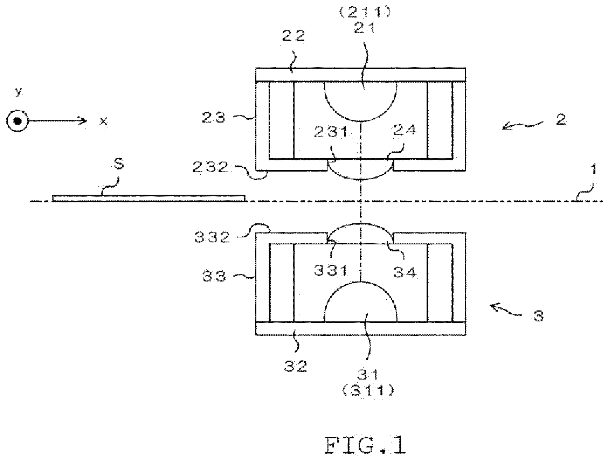

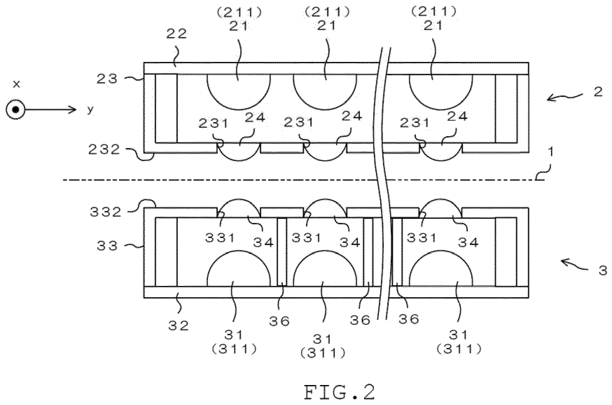

Fig. 1 is a schematic sectional view showing a configuration example of an optical line sensor unit according to one embodiment of the present invention, and shows a cross section along a sub-scanning direction x. Fig. 2 is a sectional view of the optical line sensor unit in Fig. 1 along a main scanning direction y.

This optical line sensor unit is an apparatus irradiating a paper sheet S transported along a transport path 1 with excitation light and detecting fluorescence or phosphorescence from the paper sheets S. The paper sheet S is transported in one direction or in both directions along the sub-scanning direction x. The optical line sensor unit in Fig. 1 includes a light source unit 2 and a light-receiving unit 3 that are disposed so as to face each other across the transport path 1.

The light source unit 2 includes a light source 21, a driver board 22, a housing 23, a window member (second window member) 24, and the like. The light source 21 irradiates the paper sheet S transported along the transport path 1 with excitation light. An optical axis of the excitation light emitted from the light source 21 is orthogonal to the transport path 1. The light source 21 emits light including, for example, ultraviolet light as the excitation light. The light emitted from the light source 21 may include visible light, infrared light, and the like in addition to ultraviolet light.

The paper sheet S is provided with a light emitter such as a fluorescent substance or a phosphorescent substance for authenticity determination. When the paper sheet S transported along the transport path 1 is irradiated with light from the light source 21, the light emitter is excited to emit light having a constant wavelength (fluorescence or phosphorescence). In the optical line sensor unit according to the present embodiment, the light released from the paper sheet S is received by the light-receiving unit 3, and a type and authenticity of the paper sheet S can be determined on the basis of intensity information of the light emission during the emittance of the excitation light and intensity information of the light emission after the emittance of the excitation light is stopped (afterglow).

The light source 21 is electrically connected to the driver board 22. The light source 21 is driven by electric power supplied from the driver board 22. An exterior of the light source 21 is covered with the housing 23, and the light from the light source 21 is emitted to the transport path 1 through an aperture (second aperture) 231 formed in the housing 23. The aperture 231 is provided with a window member 24 capable of transmitting the light from the light source 21.

In the present embodiment, the light source 21 includes a plurality of light-emitting elements 211. The light-emitting elements may be, for example, bullet-shaped (resin-molded) LEDs. The LEDs may be infrared LEDs. The light-emitting elements 211 are aligned in a straight line along the main scanning direction y orthogonal to the sub-scanning direction x. An interval between the light-emitting elements 211 is constant, and the excitation light is emitted from the light-emitting elements 211 with an identical intensity. A surface of the housing 23 close to the transport path 1 configures a surface close to the light source 21 with respect to the transport path 1 (second transport surface 232). The aperture 231 is formed on the second transport surface 232 at a position facing each light-emitting element 211. As a result, the second transport surface 232 is provided with a plurality of the apertures 231 along the main scanning direction y, and the plurality of apertures 231 is covered with the window member 24.

The window member 24 includes, for example, resin or glass. Alternatively, the window member 24 can include any other materials capable of transmitting light from the light-emitting elements 211 and guiding the light to the transport path 1. When the light emitted from the light source 21 includes ultraviolet light, visible light, and infrared light, the window member 24 may include a material capable of transmitting light in wavelength ranges of these lights.

The light-receiving unit 3 includes a light receiver 31, a sensor board 32, a housing 33, a window member (first window member) 34, and the like. The light receiver 31 receives light (fluorescence or phosphorescence) from the paper sheet S. The light receiver 31 includes a plurality of light-receiving elements 311 aligned in a straight line along the main scanning direction y. An interval between the light-receiving elements 311 is constant, and is the same as the interval between the light-emitting elements 211. As a result, the light-receiving elements 311 are disposed so as to face the light-emitting elements 211 across the transport path 1. An optical axis of each light-receiving element 311 is orthogonal to the transport path 1 and is coaxial with an optical axis of each light-emitting element 211 facing each light-receiving element 311. The optical axis of each light-receiving element 311 and the optical axis of each light-emitting element 211 facing each light-receiving element 311 do not have to be coaxial, but are preferably substantially aligned with each other.

The light receiver 31 is electrically connected to the sensor board 32. Signals from the light-receiving elements 311 of the light receiver 31 are processed via the sensor board 32. An exterior of the light receiver 31 is covered with the housing 33, and the light from the paper sheet S is incident on the light receiver 31 through an aperture (first aperture) 331 formed in the housing 33. The aperture 331 is provided with the window member 34 capable of transmitting the light from the paper sheet S.

A surface of the housing 33 close to the transport path 1 configures a surface close to the light receiver 31 with respect to the transport path 1 (first transport surface 332). The aperture 331 is formed on the first transport surface 332 at a position facing each light-receiving element 311. As a result, the first transport surface 332 is provided with a plurality of the apertures 331 along the main scanning direction y, and the plurality of apertures 331 is covered with the window member 34. The window member 34 includes, for example, resin or glass. Alternatively, the window member 34 can include any other materials capable of transmitting the light from the paper sheet S toward the light-receiving elements 311.

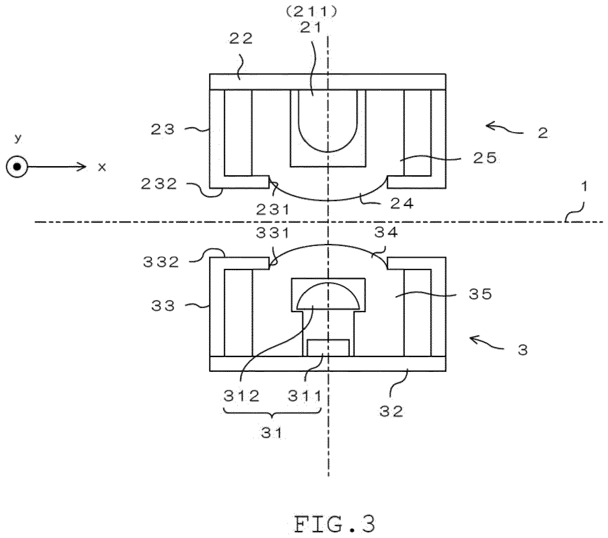

Fig. 3 is a sectional view showing a detailed configuration of the optical line sensor unit in Fig. 1. In the present embodiment, the light source unit 2 is provided with a light source holder 25 holding the light source 21, and the light-receiving unit 3 is provided with a light receiver holder 35 holding the light receiver 31.

The plurality of light-emitting elements 211 may be integrally held by one light source holder 25, or may be held by different light source holders 25. The light receiver 31 includes a plurality of lenses 312 facing the plurality of light-receiving elements 311, in addition to the plurality of light-receiving elements 311. The light from the paper sheet S is focused by the lenses 312 and imaged on light receiving surfaces of the light-receiving elements 311 facing the lenses 312. The plurality of light-receiving elements 311 and the plurality of lenses 312 may be integrally held by one light receiver holder 35, or may be held by different light receiver holders 35.

The window member 24 in the light source unit 2 is integrally formed with the light source holder 25. In this case, the window member 24 and the light source holder 25 may include the same material such as resin or glass. The window member 24 has such a lens shape that a thickness gradually increases from both edges to a center of the window member 24 in the sub-scanning direction x. Specifically, a surface of the window member 24 close to the transport path 1 has a smooth convex curved surface that protrudes toward the transport path 1 from both edges to the center in the sub-scanning direction x.

Both edges of the window member 24 in the sub-scanning direction x are located in the aperture 231 so as not to be exposed to the transport path 1. That is, both edges of the window member 24 in the sub-scanning direction x do not protrude from inside of the aperture 231 toward the transport path 1, but the center of the window member 24 in the sub-scanning direction x protrudes toward the transport path 1 from the aperture 231. However, the shape of the window member 24 is not limited to the above shape.

The window member 34 in the light-receiving unit 3 is integrally formed with the light receiver holder 35. In this case, the window member 34 and the light receiver holder 35 may include the same material such as resin or glass. The window member 34 has such a lens shape that a thickness gradually increases from both edges to a center of the window member 34 in the sub-scanning direction x. Specifically, a surface of the window member 34 close to the transport path 1 has a convex curved surface that protrudes toward the transport path 1 from both edges to the center in the sub-scanning direction x.

This window member 34 improves optical focusing efficiency, improves the S/N ratio upon detection of fluorescence or phosphorescence, and prevents crosstalk between the plurality of light-receiving elements 311. Further, the center of the window member 34 protruding from the aperture 331 can prevent the paper sheet S being transported from being caught by the aperture 331, and thus the paper sheet S is less likely to be jammed in the transport path 1. Such effects can be similarly exhibited in the window member 24 of the light source unit 2 described above.

Both edges of the window member 34 in the sub-scanning direction x are located in the aperture 331 so as not to be exposed to the transport path 1. That is, both edges of the window member 34 in the sub-scanning direction x do not protrude from inside of the aperture 331 toward the transport path 1, but the center of the window member 34 in the sub-scanning direction x protrudes toward the transport path 1 from the aperture 331. However, the shape of the window member 34 is not limited to the above shape.

In this way, both edges of the window member 34 in the sub-scanning direction x are not exposed to the transport path 1 and are located in the aperture 331, and the paper sheet S being transported is prevented from being caught by the edges. Further, a tip of the paper sheet S being transported can be smoothly guided in a transporting direction (sub-scanning direction x) along the convex curved surface of the window member 34. Thus, the paper sheet is less likely to be jammed in the transport path 1. Such effects can be similarly exhibited in the window member 24 of the light source unit 2 described above.

<Modification of window member>

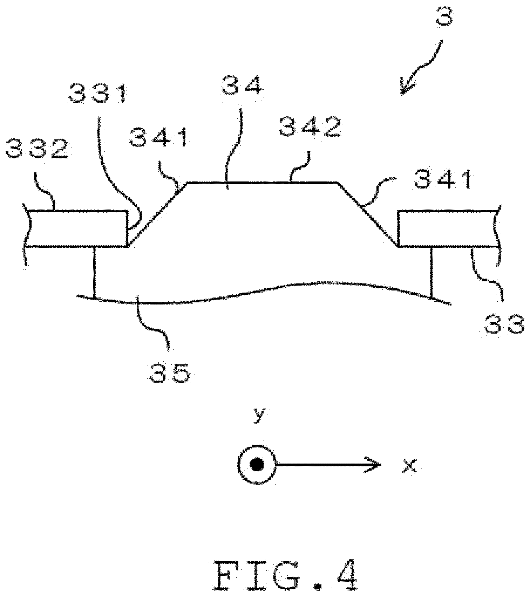

Fig. 4 is a schematic sectional view showing a modification of the window member 34 in Fig. 3. In Fig. 3, a configuration has been described in which the surface of the window member 34 of the light-receiving unit 3 close to the transport path 1 has a convex curved surface. Meanwhile, in the example of Fig. 4, the surface of the window member 34 of the light-receiving unit 3 close to the transport path 1 has an inclined surface 341 that protrudes toward the transport path 1 from both edges to the center in the sub-scanning direction x. The inclined surface 341 is connected to a flat surface 342 extending along the sub-scanning direction x at the center side of the window member 34. As a result, the surface of the window member 34 close to the transport path 1 has a trapezoidal shape.

Both edges of the window member 34 in the sub-scanning direction x (both edges of the inclined surface 341) are located in the aperture 331 so as not to be exposed to the transport path 1. That is, both edges of the window member 34 in the sub-scanning direction x do not protrude from inside of the aperture 331 toward the transport path 1, but the center of the window member 34 in the sub-scanning direction x (the center side of the inclined surface 341 and the flat surface 342) protrudes toward the transport path 1 from the aperture 331. A taper angle of the inclined surface 341 (see Fig. 4) or the convex curved surface (see Fig. 3) of the sub-scanning direction x in the window member 34 is smaller than a taper angle of the inclined surface or the convex curved surface of the main scanning direction y in the window member 34, the paper sheet can be prevented from being jammed in the transport path 1. In this example, a modification of the window member 34 of the light-receiving unit 3 has been described. The same shape may be adopted for the window member 24 of the light source unit 2.

<Shape of aperture>

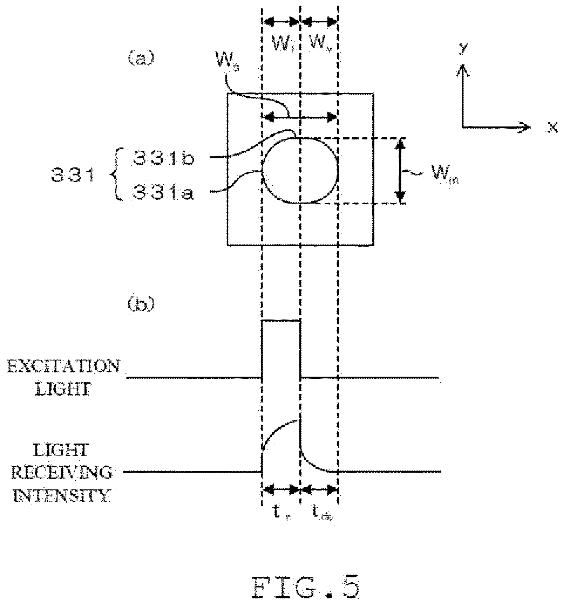

Fig. 5 is diagrams for describing a shape of the aperture 331. Fig. 5(a) is a plan view of the aperture 331. Fig. 5(b) shows a relationship between timing at which the excitation light is emitted from the light source 21 and a light receiving intensity of the light from the paper sheet S at the light receiver 31, and each timing is shown in association with the shape of the aperture 331.

As shown in Fig. 5(a), the aperture 331 is configured as an elongated hole having a width $W_s$ in the sub-scanning direction x that is longer than a width $W_m$ in the main scanning direction y. Specifically, both ends 331a of the aperture 331 in the sub-scanning direction x each have an arc shape, and both ends 331a are connected to each other by straight lines 331b. Curvature centers of both ends 331a are separated from each other, and a distance between the curvature centers corresponds to a length of the straight lines 331b.

In the present embodiment, the light-receiving elements 311 can receive fluorescence or phosphorescence from the paper sheet S through the apertures 331 provided at the positions facing the light-receiving elements 311. The apertures 331 are each formed as an elongated hole and the width $W_s$ in the sub-scanning direction x is longer than the width $W_m$ in the main scanning direction y. Thus, ambient light is prevented from being incident on the light-receiving elements 311, and more light can be received from the paper sheet S transported in the sub-scanning direction x. This can improve an S/N ratio upon detection of the fluorescence or phosphorescence.

Illuminated regions of the paper sheet S by the excitation light from the light source 21 are substantially circular. An outer diameter of the illuminated regions is preferably larger than the width $W_s$ of the apertures 331 in the sub-scanning direction x. That is, the illuminated regions of the paper sheet S face the apertures 331 so as to span the entire width $W_s$ of the apertures 331 in the sub-scanning direction x.

As shown in Fig. 5(b), the light receiving intensity from the paper sheet S in the light receiver 31 gradually increases during time when the excitation light is emitted from the light source 21 (irradiation time $t_r$ (second)). Then, when the emittance of the excitation light from the light source 21 is stopped, the light receiving intensity in the light receiver 31 sharply decreases, but after that, the light receiving intensity due to the afterglow is detected, and the light receiving intensity gradually decreases during time when the light receiving intensity due to the afterglow decays (decay time tde (seconds)).

In this example, the paper sheet S is transported along the transport path 1 in one direction along the sub-scanning direction x. In this case, when a transport speed of the paper sheet S is V (m/sec), a distance that any one point of the paper sheet S moves in the sub-scanning direction x during the decay time tde is $W_v$ (m), and a distance that any one point of the paper sheet S moves in the sub-scanning direction x during the irradiation time $t_r$ is $W_i$ (m), the widths $W_s$ and $W_m$ are set so as to satisfy the following equations (1) to (3).

$$W_v = t_{de} \times V \qquad (1)$$

$$W_i = t_r \times V \qquad (2)$$

$$W_m < W_s \leq W_v + W_i \qquad (3)$$

As a result, in a configuration in which the paper sheet S is transported in one direction along the sub-scanning direction x, the shape of the elongated holes forming the apertures 331 can be appropriately set, and thus the S/N ratio upon detection of fluorescence or phosphorescence can be effectively improved.

An arithmetic average roughness Ra of the surface of the window member 34 of the light-receiving unit 3 close to the transport path 1 preferably satisfies the following equation (4). Further, "a" in the following formula (4) means "average", "0.1a" refers to an average roughness of "0.1", and "12.5a" refers to an average roughness of "12.5".

$$0.1a \leq Ra \leq 12.5a \qquad (4)$$

Thus, a diffusion of fluorescence or phosphorescence in the window member 34 can be suppressed. This can improve the S/N ratio upon detection of fluorescence or phosphorescence, and prevent crosstalk between the plurality of light-receiving elements 311.

In the present embodiment, as shown in Fig. 2, shield 36 are provided between the light-receiving elements 311 aligned in the main scanning direction y. The shields 36 prevent fluorescence or phosphorescence diffused at the window members 34 from being incident on the light-receiving elements 311 other than the light-receiving elements 311 facing the window members 34. In this example, each shield 36 is configured by a plate-shaped member extending along a direction orthogonal to the sub-scanning direction x and the main scanning direction y (a direction of the optical axis of the light receiver 31). The shields 36 absorb or reflect light incident on surfaces of the shields 36.

The shields 36 as described above allow only the light from the opposing window members 34 to be incident on the light-receiving elements 311. This can prevent crosstalk between the plurality of light-receiving elements 311. Each shield 36 preferably completely blocks light entering and exiting between the adjacent light-receiving elements 311 but may allow some light to pass through. Each shield 36 may be integrally formed with the light receiver holder 35, or may be formed by a member other than the light receiver holder 35. Further, an outer surface or an inner surface of the light receiver holder 35 may be painted, provided with a film by vapor deposition, or subjected to two-color molding to form each shield 36.

<Modification of aperture>

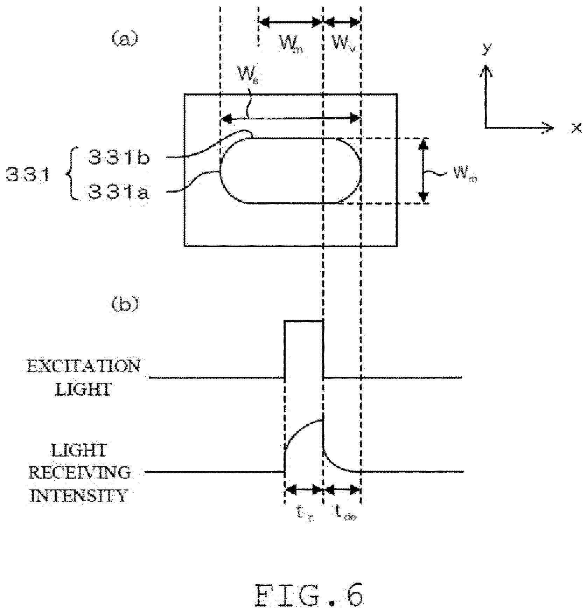

Fig. 6 is a diagram for describing a modification of the shape of the aperture 331. Fig. 6(a) is a plan view of the aperture 331. Fig. 6(b) shows a relationship between the timing at which the excitation light is emitted from the light source 21 and the light receiving intensity of the light from the paper sheet S at the light receiver 31, and each timing is shown in association with the shape of the aperture 331.

In this example, the paper sheet S is transported on the transport path 1 in both directions along the sub-scanning direction x. That is, the paper sheet S may be transported from left to right and may be transported from right to left in Fig. 6. When the paper sheet S is transported in both directions in this way, the ratio of the width $W_s$ of the aperture 331 in the sub-scanning direction x to the width $W_m$ of the aperture 331 in the main scanning direction y is larger than when the paper sheet S is transported in one direction as shown in Fig. 5. That is, the aperture 331 is an elongated hole having a longer and narrower shape along the sub-scanning direction x.

Specifically, when a transport speed of the paper sheet S is V (m/sec), a distance that any one point of the paper sheet S moves in the sub-scanning direction x during the decay time tde is $W_v$ (m), the widths $W_s$ and $W_m$ are set so as to satisfy the following equations (5) to (6).

$$W_v = t_{de} \times V \qquad (5)$$

$$W_m < W_s \leq 2W_v + W_m \qquad (6)$$

As a result, in a configuration in which the paper sheet S is transported in both directions along the sub-scanning direction x, the shape of the elongated holes forming the apertures 331 can be appropriately set, and thus the S/N ratio upon detection of fluorescence or phosphorescence can be effectively improved.

<Other modifications>

In the above embodiment, the shape of the apertures 331 of the light-receiving unit 3 has been described, but the same shape may be adopted for the apertures 231 of the light source unit 2. That is, each aperture 231 of the light-receiving unit 3 may be configured as an elongated hole having the width in the sub-scanning direction x longer than the width in the main scanning direction y.

In this case, the paper sheet S can be irradiated with light through the apertures 231 provided at positions facing the light-emitting elements 211. The apertures 231 each have an elongated hole and the width in the sub-scanning direction x longer than the width in the main scanning direction y. Thus, the paper sheet S transported in the sub-scanning direction x can be irradiated with more light. This can improve an S/N ratio upon detection of the fluorescence or phosphorescence.

If the paper sheet S is transported on the transport path 1 in one direction along the sub-scanning direction x, each aperture 231 of the light-receiving unit 3 is preferably formed in such a shape that the above equations (1) to (3) are satisfied. If the paper sheet S is transported on the transport path 1 in both directions along the sub-scanning direction x, each aperture 231 of the light-receiving unit 3 is preferably formed in such a shape that the above equations (5) and (6) are satisfied. Further, arithmetic average roughness Ra of the surface of the window member 24 of the light source unit 2 close to the transport path 1 may satisfy the above equation (4).

The apertures 231 and 331 are not limited to an oval shape having both ends being arc-shaped with curvature centers separated from each other and the straight lines connecting the ends, and may be formed, for example, in an elliptical shape having no straight lines. Further, both ends of the apertures 231 and 331 are not limited to an arc shape, but may be formed in a quadratic curve, or may be formed in a curve represented by a high-order polynomial including a spline curve.

The light source 21 does not have to have the same number of light-emitting elements 211 as the light-receiving elements 311, but a smaller number (for example, one) of light-emitting elements than the light-receiving elements 311 may emit light to the paper sheet S.

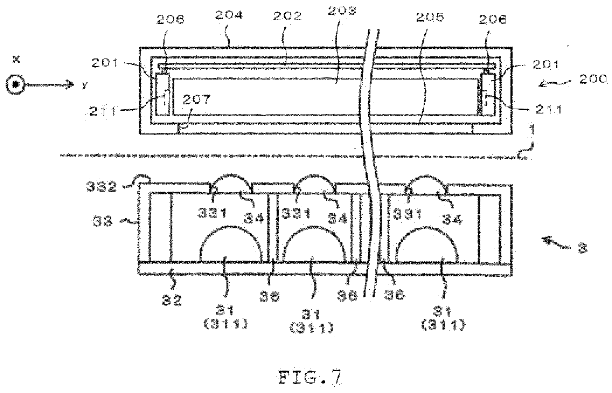

The light source 21 is not limited to a discrete light source provided with the plurality of light-emitting elements 211 as in the above embodiment, but may be, for example, a line-shaped illumination light source. Fig. 7 is a sectional view of an optical line sensor unit according to another embodiment of the present invention along the main scanning direction. In the present embodiment, only a configuration of a light source unit 200 is different from the above embodiment, and the other configurations are the same as in the above embodiment. The same reference numerals are given and detailed description thereof will not be repeated.

As shown in Fig. 7, the light source unit 200 includes a light source 201, a driver board 202, a light guide 203, a housing 204, a translucent cover 205, and the like. The light guide 203 is a transparent member that extends along the main scanning direction y, diffuses light (excitation light) entering from the light source 201, and irradiates the paper sheet S transported along the transport path 1 with the excitation light.

The light source 201 is provided at an end of the light guide 203, and emits the excitation light to an end surface of the light guide 203 along the main scanning direction y. In this example, the light sources 201 are provided at both ends of the light guide 203, but the light source 201 may be provided only at one of the end surfaces. The light source 201 emits light including, for example, ultraviolet light as the excitation light. The light emitted from the light source 201 may include visible light, infrared light, and the like in addition to ultraviolet light. When the light sources 201 are provided at both ends of the light guide 203 as in this example, light including ultraviolet light may be emitted from one light source 201, and light including visible light or infrared light may be emitted from the other light source.

The light source 201 is electrically connected to the driver board 202 via a terminal 206. The light source 201 is provided with the light-emitting element 211, and the light-emitting element 211 emits light in response to electric power supplied from the driver board 202. Exteriors of the light source 201 and the light guide 203 are covered with the housing 204, and the light from the light guide 203 is emitted to the transport path 1 through an aperture 207 formed in the housing 204. The aperture 207 is provided with the translucent cover 205 capable of transmitting the light from the light guide 203.

DESCRIPTION OF REFERENCE NUMERALS

| | |
|---|---|
| 1 | Transport path |
| 2 | Light source unit |
| 3 | Light-receiving unit |
| 21 | Light source |
| 22 | Driver board |
| 23 | Housing |
| 24 | Window member |
| 25 | Light source holder |
| 31 | Light receiver |
| 32 | Sensor board |
| 33 | Housing |
| 34 | Window member |
| 35 | Light receiver holder |
| 36 | Shield |
| 200 | Light source unit |
| 201 | Light source |
| 202 | Driver board |
| 203 | Light guide |
| 211 | Light-emitting element |
| 231 | Aperture |
| 232 | Second transport surface |
| 311 | Light-receiving element |
| 312 | Lens |
| 331 | Aperture |
| 332 | First transport surface |

**Claims**

1. An optical line sensor unit configure to irradiate a paper sheet transported on a transport path along a sub-scanning direction with excitation light and detect fluorescence or phosphorescence from the paper sheet, the optical line sensor unit comprising:

a light source configured to emit the excitation light;
a light receiver having a plurality of light-receiving elements aligned in a main scanning direction orthogonal to the sub-scanning direction and configured to receive the fluorescence or phosphorescence from the paper sheet by the plurality of light-receiving elements;
a first transport surface including a surface closer to the light receiver with respect to the transport path;
a plurality of first apertures provided at positions facing the light-receiving elements on the first transport surface; and
a plurality of first window members covering the plurality of first apertures and configured to transmit the fluorescence or phosphorescence from the paper sheet toward the light-receiving elements,
wherein the plurality of first apertures is elongated holes each having a width in the sub-scanning direction longer than a width in the main scanning direction.

2. The optical line sensor unit according to claim 1, wherein an optical axis of the light source and an optical axis of each of the light-receiving elements are substantially aligned with each other.

3. The optical line sensor unit according to claim 1 or 2, wherein
the light receiver has a plurality of lenses configured to focus the fluorescence or phosphorescence from the paper sheet on the plurality of light-receiving elements, and
the optical line sensor unit further includes a light receiver holder holding the plurality of light-receiving elements and the plurality of lenses.

4. The optical line sensor unit according to any one of claims 1 to 3, wherein the plurality of first apertures each has an oval shape.

5. The optical line sensor unit according to claim 4, wherein each of the plurality of first apertures has both ends being arc-shaped with curvature centers separated from each other and straight lines connecting the both ends.

6. The optical line sensor unit according to any one of claims 1 to 5, further comprising a plurality of shields provided between the light-receiving elements aligned in the main scanning direction, and preventing the fluorescence or phosphorescence diffused at the first window members from being incident on the light-receiving elements other than the light-receiving elements facing the first window members.

7. The optical line sensor unit according to any one of claims 1 to 6, wherein
the paper sheet is transported in both directions on the transport path along the sub-scanning direction, and

$$W_v = t_{de} \times V$$

$$W_m < W_s \leq 2W_v + W_m$$

where a width of each of the first apertures in the main scanning direction is $W_m$, a width each of the first apertures in the sub-scanning direction is $W_s$, decay time of the fluorescence or phosphorescence is tde (second), a transport speed of the paper sheet is V (m/sec), and a distance that any point of the paper sheet moves in the sub-scanning direction during the decay time is $W_v$ (m).

8. The optical line sensor unit according to any one of claims 1 to 6, wherein
the paper sheet is transported in one direction on the transport path along the sub-scanning direction, and

$$W_v = t_{de} \times V$$

$$W_i = t_r \times V$$

$$W_m < W_s \leq W_v + W_i$$

where a width of each of the first apertures in the main scanning direction is $W_m$, a width of each of the first apertures in the sub-scanning direction is $W_s$, decay time of the fluorescence or phosphorescence is tde (second), irradiation time of the excitation light from the light source is $t_r$ (second), a transport speed of the paper sheet is V (m/sec), a distance that any point of the paper sheet moves in the sub-scanning direction during the decay time is $W_v$ (m), and a distance that any point of the paper sheet moves in the sub-scanning direction during the irradiation time is $W_i$ (m).

9. The optical line sensor unit according to any one of claims 1 to 8, wherein
the paper sheet has an illuminated region by the excitation light from the light source, the illuminated region having a substantially circular shape, and
the illuminated region has an outer diameter larger than the width of each of the first apertures in the sub-scanning direction.

10. The optical line sensor unit according to any one of claims 1 to 9, wherein each of the plurality of first window members has a surface close to the transport path, the surface having arithmetic average roughness Ra satisfying

$$0.1a \leq Ra \leq 12.5a.$$

11. The optical line sensor unit according to any one of claims 1 to 10, wherein the plurality of first window members each has such a lens shape that a thickness gradually increases from both edges to a center of each of the window members in the sub-scanning direction.

12. The optical line sensor unit according to any one of claims 1 to 11, wherein
the surface of each of the first window members close to the transport path has an inclined surface or a convex curved surface that protrudes toward the transport path from the both edges to the center in the sub-scanning direction, and
the both edges of each of the first window members in the sub-scanning direction are located in each of the first apertures not to be exposed to the transport path.

13. The optical line sensor unit according to any one of claims 1 to 12, wherein
the light source has a plurality of light-emitting elements facing the plurality of light-receiving elements across from the transport path, and
the optical line sensor unit further includes a second transport surface configuring a surface close to the light source with respect to the transport path, a plurality of second apertures provided at positions facing the light-emitting elements on the second transport surface, and a plurality of second window members covering the plurality of second apertures and configured to transmit light from the light-emitting elements.

14. The optical line sensor unit according to claim 13, wherein the plurality of second apertures is elongated holes each having a width in the sub-scanning direction longer than a width in the main scanning direction.

15. The optical line sensor unit according to claim 13 or 14, wherein the plurality of light-emitting elements is infrared light emitting diodes (LEDs).

16. The optical line sensor unit according to any one of claims 13 to 15, wherein the plurality of light-emitting elements is bullet-shaped LEDs.

17. The optical line sensor unit according to any one of claims 1 to 15, wherein
the surface of each of the first window members close to the transport path has an inclined surface or a convex curved surface that protrudes toward the transport path from the both edges to the center in the sub-scanning direction, and
the both edges of each of the first window members in the sub-scanning direction are located in each of the first apertures not to be exposed to the transport path.

FIG.1

FIG.2

FIG.3

FIG.4

(a)

$W_s$

$W_i$ $W_v$

y

x

$331\begin{cases} 331b \\ 331a \end{cases}$

$W_m$

(b)

EXCITATION LIGHT

LIGHT RECEIVING INTENSITY

$t_r$ $t_{de}$

FIG.5

(a)

$W_m$   $W_v$

$W_s$

$y$

$x$

$331$ { $331b$   $331a$

$W_m$

(b)

EXCITATION
LIGHT

LIGHT
RECEIVING
INTENSITY

$t_r$   $t_{de}$

FIG.6

FIG.7

<div align="center">

**INTERNATIONAL SEARCH REPORT**

</div>

| International application No. |
|---|
| PCT/JP2019/024712 |

**A. CLASSIFICATION OF SUBJECT MATTER**
Int.Cl. G07D7/121(2016.01)i, G01N21/64(2006.01)i

According to International Patent Classification (IPC) or to both national classification and IPC

**B. FIELDS SEARCHED**

Minimum documentation searched (classification system followed by classification symbols)
Int.Cl. G07D7/121, G01N21/64

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2015/159438 A1 (GLORY LTD.) 22 October 2015 & EP 3133562 A1 | 1–17 |
| A | JP 2014-186597 A (NIPPON CONLUX CO., LTD.) 02 October 2014 (Family: none) | 1–17 |
| A | JP 2010-60524 A (TOSHIBA CORP.) 08 March 2010 (Family: none) | 1–17 |

☒ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 September 2019 (11.09.2019) | 24 September 2019 (24.09.2019) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2019/024712

C (Continuation). DOCUMENTS CONSIDERED TO BE RELEVANT

| Category* | Citation of document, with indication, where appropriate, of the relevant passages | Relevant to claim No. |
|---|---|---|
| A | JP 2014-115930 A (NIPPON CONLUX CO., LTD.) 26 June 2014 (Family: none) | 1-17 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4048121 B
- JP 5367509 B
- WO 2015159438 A